# FASCICULE DE BREVET EUROPEEN

(11) **EP 3 374 319 B1**
(45) Date de publication et mention de la délivrance du brevet: **21.04.2021**
(21) Numéro de dépôt: 16794591.4
(22) Date de dépôt: 09.11.2016
(51) Int. Cl.: C02F 1/52, C02F 1/56

(54) **TRAITEMENT PRIMAIRE D'EAUX RÉSIDUAIRES AVEC BASCULEMENT D'UN FONCTIONNEMENT SANS RÉACTIF A UN FONCTIONNEMENT AVEC RÉACTIF**
PRIMÄRE BEHANDLUNG VON ABWASSER MIT WECHSEL VON REAGENZIENFREIEM BETRIEB ZU BETRIEB MIT REAGENZIEN
PRIMARY TREATMENT OF WASTEWATER WITH SWITCHING FROM REAGENT-FREE OPERATION TO OPERATION WITH REAGENT

(30) Priorité: 12.11.2015 FR 1560797
(43) Date de publication de la demande: 19.09.2018
(73) Titulaire: Suez International, 92040 Paris la Défense Cedex (FR)
(72) Inventeur: GINESTET, Philippe, 78117 Chateaufort (FR); LE QUINIO, Magali, 92800 Puteaux (FR)
(74) Mandataire: IPAZ
(86) Numéro de dépôt international: PCT/EP2016/077085
(87) Numéro de publication internationale: WO 2017/081063

(56) Documents cités:
- EP-A2- 0 767 143
- FR-A1- 2 822 080

## Description

### DOMAINE TECHNIQUE DE L'INVENTION

La présente invention est relative à la conception d'un système de traitement primaire physico-chimique d'eaux usées par coagulation-floculation-décantation et à son fonctionnement lors de la phase de transition d'un fonctionnement sans réactifs à un fonctionnement avec réactifs.

### ETAT DE LA TECHNIQUE ANTERIEURE

Le traitement primaire des eaux résiduaires se fait très souvent à l'aide d'un ouvrage de traitement primaire placé en amont d'un traitement biologique. Selon le procédé de traitement biologique, le traitement primaire peut être « simple » (sans ajout de réactif de coagulation et de réactif de floculation) ou « aidé » (ajout de réactifs de coagulation, de floculation et éventuellement d'agents lestants).

Les ouvrages de décantation primaire avec réactifs, conventionnels ou lamellaires, peuvent être classés en 3 grandes familles :
- réacteurs sans lits de boues,
- réacteurs sans lits de boues à agents lestants (microsable par exemple).
- réacteur avec lit de boues (recirculation d'une partie des boues)

La présente invention concerne les réacteurs à lit de boues.

L'épuration des eaux est un ensemble de techniques qui consistent à purifier l'eau soit pour recycler les eaux usées dans le milieu naturel, soit pour transformer les eaux naturelles en eau potable.

Parmi les différents traitements, on trouve la coagulation-floculation traitement physico-chimique d'épuration de l'eau qui favorise la sédimentation des colloïdes. Dans un premier temps, la coagulation, notamment par un ajout de sels métalliques (généralement de fer ou d'aluminium), permet de supprimer les répulsions intercolloïdales : les cations métalliques (Al³⁺ et Fe³⁺) se lient aux colloïdes et les neutralisent permettant ainsi aux particules colloïdales de se rencontrer. Dans un second temps, la floculation permet de s'attaquer au problème du faible diamètre des colloïdes. Le véritable souci est en fait la masse, qui ne permet pas une sédimentation naturelle et exploitable dans le cadre d'un traitement. La solution exploitée par la floculation est de provoquer, grâce à l'ajout de floculant, une agglomération des particules colloïdales. Par la suite, cet agglomérat de colloïdes appelé floc dispose d'une masse suffisante pour pouvoir décanter. Le floculant ajouté est généralement un polymère, qu'il soit organique ou naturel, qui va jouer le rôle de colle entre les colloïdes. Les coagulants et les floculants constituent ce qu'on appelle des réactifs.

Il est très courant que les ouvrages de traitement primaire avec réactifs doivent fonctionner sans réactifs en vue d'économies de réactifs lorsque le débit ou la charge de la station le permet, pour augmenter l'apport de matière organique sur l'étage biologique. Ainsi, le fonctionnement sans réactif (décantation simple) peut constituer le cas normal et en cas de débit plus élevé (par exemple, en temps de pluie), un fonctionnement avec réactifs se met en place. FR2822080 décrit un tel ouvrage de traitement primaire.

Lorsque les réacteurs à lit de boues basculent d'un fonctionnement « sans réactifs » à un fonctionnement « avec réactifs », un certain nombre de points de vigilance sont à considérer :
- le surnageant contient de l'eau décantée simple, fortement chargée en colloïdes et en matières en suspension. Au débit maximal, le temps de renouvellement hydraulique de l'ouvrage complet est en général compris entre 15 et 45 minutes.
- le floculateur n'a pas la masse de contact suffisante pour assurer une floculation correcte.
- la boue en fond d'ouvrage n'est pas conditionnée, (c'est-à-dire qu'elle ne contient pas de réactif et n'est donc pas lestée) et risque :
   ∘ si elle est re-circulée vers le floculateur et repasse dans la zone de décantation, de se retrouver pour partie dans l'eau traitée ou
   ∘ d'être arrachée au fond à la survenue d'un débit élevé et de partiellement contaminer l'eau traitée

En effet, ces boues non-conditionnées issues d'une décantation simple n'ont généralement pas une vitesse de chute intrinsèque suffisante pour pouvoir décanter aux vitesses appliquées dans les forts débits.

Pour éviter les départs de boues de décantation simple à l'arrivée de débits élevés, il est généralement préconisé de les évacuer avant cette survenue.

C'est pourquoi aujourd'hui, la procédure mise en place avant de basculer d'un fonctionnement « sans réactifs » à un fonctionnement « avec réactifs », implique donc l'extraction forcée des boues primaires non-conditionnées, en l'absence de recirculation, et le démarrage du fonctionnement avec réactifs avant l'arrivée des débits élevés.

Cette opération peut s'avérer assez longue (2 à 5h) et parfois incompatible avec les capacités d'anticipation de ces évènements (en termes de temps, de durée et d'ampleur) et des capacités de traitement et/ou de stockage de ces boues au sein de l'installation. Ceci peut entraîner des surcoûts d'exploitation et d'investissement.

Aussi existe-t-il un besoin de disposer d'un procédé permettant le basculement d'un fonctionnement « sans réactifs » à un fonctionnement « avec réactifs », qui soit économiquement peu coûteux tout en étant fiable et facile à mettre en œuvre.

### EXPOSE DE L'INVENTION

La présente invention permet de mettre en œuvre le conditionnement des boues de décantation simple (par exemple des boues de temps sec) avec des réactifs au début de la survenue de forts débits (par exemple, arrivée du temps de pluie) plutôt que d'en forcer l'évacuation.

La présente invention a donc pour objet un procédé de traitement des eaux résiduaires d'origine urbaine ou industrielle tel que décrit dans la revendication 1, en particulier un procédé de traitement primaire des eaux, ledit procédé comprenant un premier mode P1 de fonctionnement du système de traitement appelé « mode sans réactifs », un deuxième mode P2 de fonctionnement de transition du mode « sans réactifs » P1 à un troisième mode P3, ledit troisième mode P3 de fonctionnement du système de traitement étant appelé «mode avec réactifs », le passage du premier mode P1 au deuxième mode P2 se faisant après vérification d'un premier ensemble de conditions C1, le passage du deuxième mode P2 au troisième mode P3 se faisant après vérification d'un deuxième ensemble de conditions C2 et le passage du troisième mode P3 au premier mode P1 se faisant après vérification d'un troisième ensemble de conditions C3.

Au sens de la présente invention, le premier mode de fonctionnement P1 correspondant à un mode de fonctionnement du système de traitement appelé « mode sans réactifs » , est un mode de fonctionnement appelé « décantation simple » dans lequel les matières en suspension sont séparées de l'eau uniquement par gravité en l'absence de réactifs classiquement utilisés comme des floculants et les coagulants. L'eau est en général évacuée par surverse et les boues formées sont récupérées au fond de la zone de décantation et éventuellement au moins une partie de boues est recirculée vers la zone de floculation.

Au sens de la présente invention, le deuxième mode de fonctionnement P2 est un mode de transition ou une phase de transition permettant au début de la survenue de forts débits le conditionnement, avec ajout de réactifs (coagulant et/ou floculant), des boues de décantation simple recirculées. Ainsi, à la fin du deuxième mode de fonctionnement P2, les boues circulant dans le système de traitement sont conditionnées car elles auront été en contact avec un coagulant.

Au sens de la présente invention, le troisième mode de fonctionnement P3 correspondant à un mode de fonctionnement du système de traitement appelé «mode avec réactifs » est un mode de fonctionnement dans lequel un réactif coagulant permet de rassembler les très fines particules contenues dans l'eau afin de créer des "flocs", qui sont collés ensemble par l'action d'un floculant, ce qui permet de former des gros "flocs", qui vont se séparer beaucoup plus rapidement de l'eau à traiter par décantation.

Dans ce qui suit les termes « coagulant » et « agent de coagulation » sont équivalents ; les termes « floculant » et « agent de floculation » le sont également.

A titre d'exemple de coagulants, on peut citer notamment, les coagulants minéraux comme les sels de fer ou d'aluminium et les coagulants organiques ou leurs mélanges. A titre de floculants, on peut citer notamment, les floculants minéraux (comme la silice activée et le silicoaluminate), les floculants organiques (polymères) naturels (comme les alginates, les amidons) et de synthèse, ou les mélanges de ces différents floculants.

Dans un mode de réalisation avantageux de l'invention, d'autres réactifs comme les agents lestants peuvent également être utilisés.

Dans un mode de réalisation avantageux de l'invention, le procédé comprend en outre un ou plusieurs systèmes de vérification de l'ensemble des conditions C1, C2 et C3 permettant :
a. au procédé, lorsqu'il est dans le premier mode P1 et qu'au moins une des conditions du premier ensemble de conditions C1 n'est pas vérifiée, de basculer dans le deuxième mode P2,
b. au procédé, lorsqu'il est dans le deuxième mode P2 et qu'au moins une des conditions de l'ensemble de conditions C2 n'est pas vérifiée, de basculer dans le troisième mode P3 et
c. au procédé, lorsqu'il est dans le troisième mode P3 et que l'une des conditions du troisième ensemble de conditions C3 est vérifiée, de basculer dans le premier mode P1.

Lorsque le procédé est dans le premier mode P1 ou dans le deuxième mode P2 et que toutes les conditions correspondantes sont vérifiées alors le procédé reste dans le premier mode P1 ou dans le deuxième mode P2.

Parmi les paramètres constituant les conditions C1, C2 et C3 on peut citer au moins la mesure du débit d'eau et/ou la qualité de l'eau et/ou la qualité des boues et/ou un signal provenant des services météorologiques et/ou de mesures faites en amont dans le réseau d'assainissement.

Selon un mode de réalisation de l'invention, le procédé comprend une étape de vérification de l'ensemble de conditions C1, C2 et C3 permettant :
a. au procédé, lorsqu'il est dans le premier mode P1 et qu'au moins une des conditions du premier ensemble de conditions C1 n'est pas vérifiée, de basculer dans le deuxième mode P2,
b. au procédé, lorsqu'il est dans le deuxième mode P2 et qu'au moins une des conditions du deuxième ensemble de conditions C2 n'est pas vérifiée, de basculer dans le troisième mode P3 et
c. au procédé, lorsqu'il est dans le troisième mode P3 et que l'une des conditions de l'ensemble des conditions C3 est vérifiée, de basculer dans le premier mode P1.

Conformément à l'invention, la période de fonctionnement du procédé dans le premier mode P1 comprend:
a) le passage de l'eau brute à traiter dans une zone dite de coagulation dans laquelle aucun coagulant n'est présent, ni injecté puis
b) le passage de l'eau issue de ladite zone de coagulation dans une zone dite de floculation dans laquelle aucun agent de floculation n'est présent, ni injecté puis
c) le passage de l'eau issue de ladite zone de floculation dans une zone dite de décantation, puis
d) éventuellement une étape de recirculation des boues de décantation simple issues de ladite zone de décantation vers ladite zone de floculation par un circuit externe ladite zone de floculation étant située en amont de ladite zone de décantation,
et la période de fonctionnement du procédé dans le deuxième mode P2 peut comprendre :
a) soit une étape de recirculation des boues de décantation simple issues de ladite zone de décantation vers ladite zone de coagulation par un circuit externe, ladite zone de coagulation étant située en amont de ladite zone de décantation et ladite zone de coagulation recevant un coagulant,
b) soit une étape de recirculation des boues de décantation simple issues d'une zone de décantation vers le point d'arrivée de l'eau brute situé en amont de la mesure de turbidité (NTU) ou de Matières En Suspension (MES) de ladite eau brute par un circuit externe, ladite arrivée d'eau brute étant située en amont de la zone de coagulation recevant du coagulant,
c) soit une étape de recirculation des boues de décantation simple issues de ladite zone de décantation vers ladite zone de floculation par un circuit externe, ledit circuit recevant du coagulant via un système d'injection de coagulant dans ledit circuit, ladite zone de floculation étant située en amont de ladite zone de décantation.

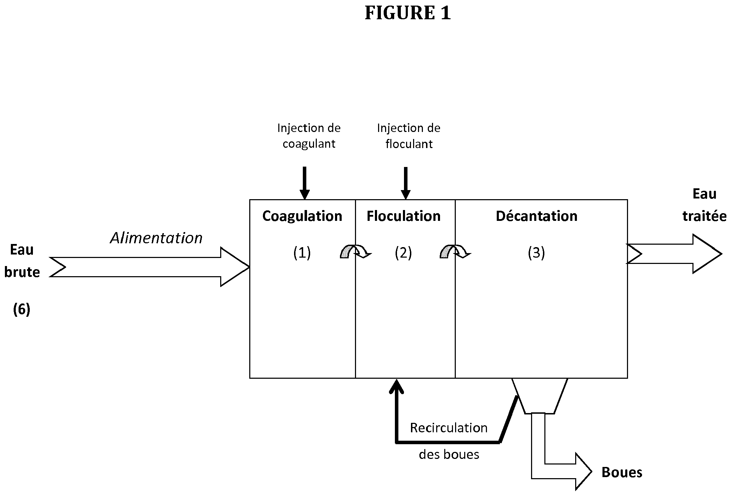

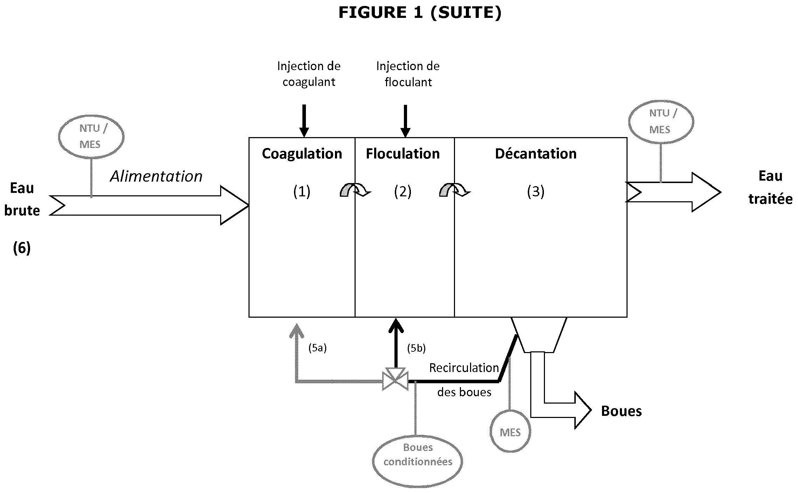

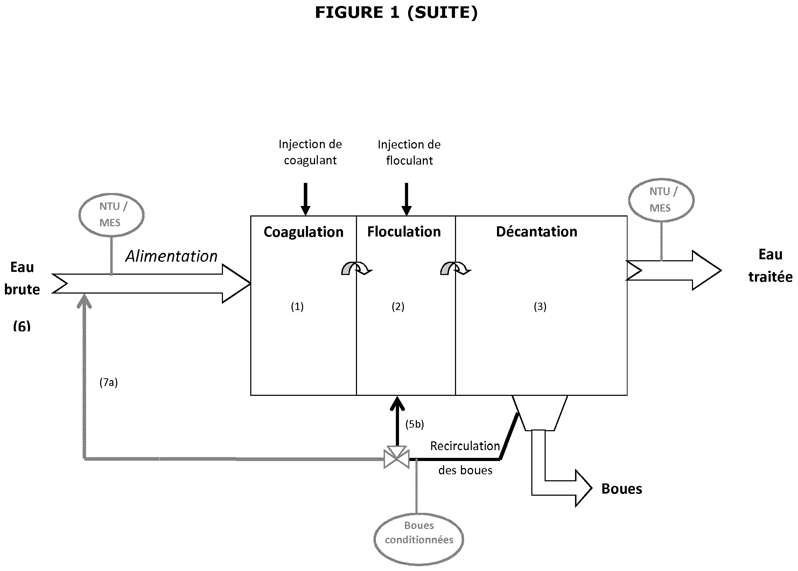

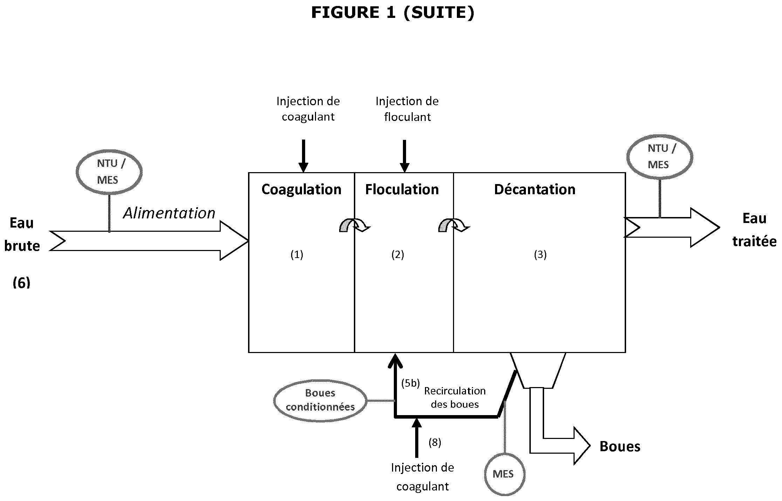

Il est à noter que le choix entre les étapes (a), (b) ou (c) mentionnées ci-dessus est fait par rapport au dimensionnement de l'installation du réseau d'assainissement. L'étape de recirculation (a) correspond à la figure 1B, l'étape de recirculation (b) correspond à la figure 1C et l'étape de recirculation (c) correspond à la figure 1D. L'avantage de l'étape de recirculation (b) est l'affranchissement d'un moyen de mesure supplémentaire de MES ou NTU. Cependant, l'inconvénient de l'étape de recirculation (b) est qu'elle nécessite l'ajout d'un tuyau de taille élevée pour recirculer les boues de décantation simple vers le point d'arrivée de l'eau brute. L'avantage de l'étape de recirculation (c) est qu'il n'y a pas de modifications structurelles du réseau d'assainissement hormis l'ajout du tuyau d'injection du coagulant et d'une vanne (non illustré dans la figure 1D) entre le tuyau d'injection et la boucle de recirculation des boues pour arrêter l'injection de coagulant lors du basculement de mode de fonctionnement P2 au mode de fonctionnement P3. Cependant, l'inconvénient de l'étape de recirculation (c) est qu'elle nécessite l'ajout d'un capteur supplémentaire MES ou NTU au niveau de la boucle de recirculation des boues. Par ailleurs, l'avantage de l'étape de recirculation (a) par rapport à l'étape de recirculation (b) est l'ajout d'un tuyau moins long pour recirculer les boues de décantation simple vers la zone de coagulation par rapport au tuyau de l'étape de recirculation (b) mentionné ci-dessus. Cependant, l'inconvénient de l'étape de recirculation (a) est qu'elle nécessite l'ajout d'un capteur supplémentaire MES ou NTU au niveau de la boucle de recirculation des boues.

Conformément à l'invention, la période de fonctionnement du procédé dans le troisième mode P3 comprend:
a) le passage de l'eau brute à traiter dans une zone dite de coagulation dans laquelle un agent coagulant est présent ; puis
b) le passage de l'eau issue de ladite zone de coagulation dans une zone dite de floculation dans laquelle un agent de floculation est présent puis
c) le passage de l'eau issue de ladite zone de floculation dans une zone dite de décantation, puis
d) éventuellement une étape de recirculation des boues de décantation conditionnées lors du deuxième mode P2 issues de ladite zone de décantation vers ladite zone de floculation par un circuit externe ladite zone de floculation étant située en amont de ladite zone de décantation.

Au sens de la présente invention on appelle « zone d'alimentation » la zone d'arrivée de l'eau brute. La zone de coagulation est la zone de formation des flocs suite à l'addition de coagulant. Cette zone est en général formée d'un réacteur recevant à la fois l'eau brute et le coagulant. Cette zone est un volume (conduite, canal, réacteur) dans lequel le mélange et le brassage peuvent être assurés par des mélangeurs dynamiques (hélices), par brassage au gaz ou des mélangeurs statiques. La zone de floculation est la zone d'assemblage des flocs par addition d'un floculant. Cette zone est formée d'une enceinte munie d'un floculateur et recevant les flocs issus de la zone de coagulation et un floculant. On peut citer à titre d'exemple les floculateurs agités ou statiques. La zone de décantation est la zone de séparation entre l'eau et les flocs ; cette zone comprend une arrivée de l'eau et des flocs depuis la zone de floculation, un circuit de sortie des boues et un circuit de retour des boues épaissies en amont de la zone de décantation.

Le démarrage du deuxième mode P2 ou phase de transition se fait :
a) soit sur seuil de débit (fixe ou dépendant de l'heure de la journée),
b) soit sur seuil d'augmentation de débit sur un temps donné, représentée par la dérivée de la vitesse par rapport au temps, augmentation qui est plus élevée en temps de pluie (TP) qu'en temps sec (TS),
c) soit sur commande manuelle ou automatique à partir, par exemple, d'un signal provenant des services météorologiques et/ou de mesures faites en amont dans le réseau d'assainissement.

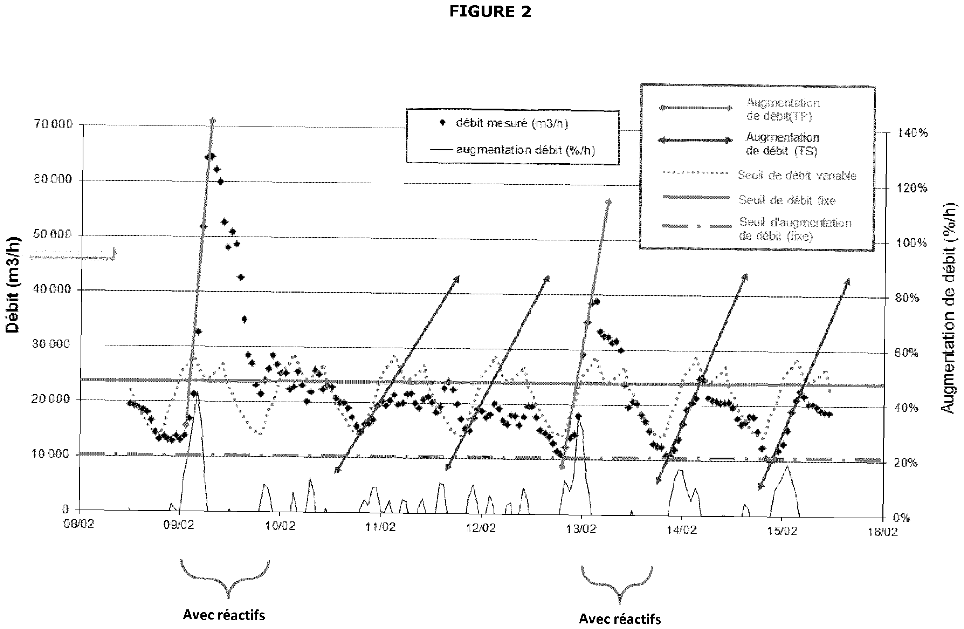

Le graphique de la figure 2 montre les stratégies de démarrage de la transition (analyse de la valeur et de la dérivée par rapport au temps du débit d'eau brute).

En fonction de la nature du réseau et du profil de débit, la logique de démarrage peut être adaptée (également par auto-apprentissage des données mesurées: analyse en temps réel du profil de débit réel par rapport au profil de débit « typique » réactualisé à partir des profils de débits typiques des jours précédents).

Dans le deuxième mode P2 ou phase de transition dans un premier temps,
- soit les boues primaires de décantation simple sont re-circulées vers l'alimentation du coagulateur, soit directement vers la zone de coagulation via un circuit externe (Figure 1B) soit en entrée vers l'alimentation du système via un autre circuit externe (Figure 1C) en amont de la zone de coagulation 1 pour conditionnement avec réactifs, de préférence du type coagulant. Les dosages de réactifs de coagulation et de floculation sont adaptés en conséquence, par exemple, par asservissement à la mesure directe ou indirecte de la turbidité ou de la teneur en MES en entrée de coagulateur (Figure 1B et 1C),
- soit les boues primaires de décantation simple sont conditionnées par injection de réactif de coagulation dans la recirculation des boues, via un circuit externe de la zone de décantation vers le floculateur/zone de floculation (Figure 1D). Les dosages de réactifs de coagulation et de floculation sont adaptés en conséquence, par exemple, par asservissement à une mesure représentative de la turbidité ou de la teneur en MES des boues récupérées en fond de zone de décantation.

Après un certain temps compris entre 30 minutes et 1 heure, soit sur décision de l'opérateur, soit suite à l'envoi d'un signal par le système de mesure de la qualité des boues recirculées (« Boues conditionnées ») et si la turbidité de l'eau traitée est correcte, alors le système passe au mode de fonctionnement « avec réactifs » standard (P3).

Dans le troisième mode de fonctionnement « avec réactifs » standard P3: l'eau brute arrive dans le système de traitement via le point d'arrivée de l'eau brute, elle passe ensuite au moins dans la zone de coagulation, dans laquelle un coagulant est injecté, puis elle passe au moins dans la zone de floculation, dans laquelle un agent de floculation est injecté, puis elle passe dans la zone de décantation. En sortie de la zone de décantation, au moins une partie des boues, conditionnées suite au deuxième mode P2, est éventuellement recirculée via un circuit externe vers la zone de floculation (figures 1B, 1C, 1D). Il est à noter que pendant la période de fonctionnement du troisième mode P3, dans le mode de réalisation de la figure 1D, il n'y a pas d'injection de réactif de coagulation dans la boucle de recirculation du circuit externe (Figure 1D).

L'arrêt du mode de fonctionnement « avec réactifs », troisième mode P3 peut se faire :
- soit sur seuil de débit (seuil fixe ou dépendant de l'heure de la journée et d'augmentation de débit, le tout pendant un temps donné et à condition que le troisième mode P3 ait fonctionné pendant un certain temps minimum fixé,
- soit sur commande manuelle de l'opérateur.

L'impact positif du reconditionnement des boues de décantation simple conforme à l'invention est la possibilité de travailler à un optimum de concentration pour lequel le flux massique est maximal, y compris lors des phases de transition: ce point est le flux massique limite. Ce flux dépend de la nature de l'eau et du dosage de réactifs (coagulant et floculant). En effet, un des critères principaux de dimensionnement et d'exploitation des décanteurs physicochimiques à lit de boues est le flux massique (kg/m²/h), qui traduit la capacité des matières en suspension coagulées et floculées à décanter, c'est à dire la quantité de matière pouvant passer au travers d'une surface de 1 m² en 1 heure. Comme ce paramètre dépend de la concentration, si la concentration est faible, la masse critique permettant une vitesse de décantation optimale n'est pas atteinte et le flux massique est faible. En revanche, pour les fortes concentrations, le flux massique décroît et la décantation est dite freinée.

Dans un mode de réalisation avantageux de l'invention, le premier ensemble de conditions C1 comprend :
a. un débit d'eaux résiduaires inférieur à un seuil de débit fixe (ce seuil de débit fixe pouvant être variable selon les heures de la journée, sur l'exemple de la figure 2, le seuil de débit fixe serait de 23 000 m3/h et le seuil variable varierait de 14 000 m3/h à 28 000 m3/h),
b. une augmentation de débit sur un temps donné (par exemple, 10 minutes) inférieure à une valeur seuil (sur l'exemple de la figure 2, cette valeur seuil serait de 20%/h) et
c. le mode de fonctionnement « avec réactifs » de transition n'a pas été activé manuellement.

Si l'une au moins de ces conditions n'est pas remplie, c'est-à-dire si le débit est supérieur à un débit fixé à l'avance, ou si sur un temps donné l'augmentation de débit dépasse la valeur seuil, ou si le mode de fonctionnement « avec réactifs » de transition est activé manuellement, alors le procédé basculera dans le second mode P2 dit mode de transition.

Dans un mode de réalisation avantageux de l'invention le deuxième ensemble de conditions C2 comprend :
a. une qualité de boues recirculées reconditionnées inférieure à une valeur seuil,
b. un temps de fonctionnement du procédé en phase de transition P2 inférieur à un temps seuil fixé et
c. le mode de fonctionnement « avec réactifs » standard n'a pas été activé manuellement

Si l'une au moins de ces conditions n'est pas remplie, c'est-à-dire si la qualité de boues est supérieure à la valeur seuil, ou si le temps de fonctionnement de la phase de transition est supérieur au temps minimum fixé pour cette phase, ou si le fonctionnement « avec réactifs » standard est activé manuellement, alors le procédé basculera dans le troisième mode P3.

Dans un mode de réalisation avantageux de l'invention, le troisième ensemble de conditions C3 comprend :
a. un débit d'eaux résiduaires inférieur à un seuil de débit fixé (ce seuil de débit fixé pouvant être variable selon les heures de la journée), et une augmentation de débit sur un temps donné (par exemple, 10 minutes) inférieure à une valeur seuil, et un temps de fonctionnement en mode « avec réactifs » standard supérieur au temps de fonctionnement en mode « avec réactifs » standard minimum
b. le mode de fonctionnement « sans réactifs » est activé manuellement.

Si l'une de ces conditions (a) ou (b) est remplie alors le procédé basculera dans le premier mode P1 dit mode « sans réactifs ».

La présente invention peut être implémentée à l'aide d' un réacteur à lit de boues pour le traitement primaire des eaux résiduaires d'origine urbaine ou industrielle comprenant un décanteur physico-chimique à floc lesté, ledit décanteur étant au moins constitué par une zone de coagulation, une zone de floculation, une zone de décantation et un circuit externe permettant la recirculation de boues à partir de la zone de décantation, ladite recirculation des boues se faisant :
a. soit à partir de la zone de décantation vers la zone de coagulation par un circuit externe,
b. soit à partir de la zone de décantation vers le point d'arrivée de l'eau brute en amont de la mesure de turbidité (NTU) ou de la mesure de Matières en Suspension (MES) de ladite eau brute par un circuit externe,
c. soit à partir de la zone de décantation vers la zone de floculation par un circuit externe ledit circuit externe étant muni d'un système d'injection de coagulant situé entre la sortie de la zone de décantation et la zone de floculation, ladite zone de floculation étant située en amont de ladite zone de décantation.

Le réacteur peut comprendre un système de régulation du dosage d'agents de coagulation et de floculation, un ou plusieurs systèmes de mesure directe ou indirecte de turbidité (NTU) ou de Matières En Suspension (MES), lesdits systèmes de mesure de turbidité ou de Matières En Suspension étant placés en entrée du coagulateur, et/ou éventuellement au niveau de la zone de décantation, un ou plusieurs systèmes de vérification des ensembles des conditions C1, C2 et C3 aptes à permettre le passage du premier mode P1 au deuxième mode P2, du deuxième mode P2 au troisième mode P3, et du troisième mode P3 au premier mode P1.

Par exemple, l'un ou les plusieurs systèmes de vérification de l'ensemble des conditions C1, C2 et C3 est basé, par exemple, soit sur une alerte météorologique, soit sur un seuil de débit correspondant à une vitesse de décantation appliquée fixée, soit sur une analyse en temps réel du profil de débit réel, par rapport au profil de débit « typique » réactualisé à partir des profils de débits typiques des jours précédents, soit sur des temporisations, par exemple le temps de fonctionnement minimum et le temps de stabilisation.

Le réacteur peut comprendre
- un système de régulation du dosage d'agents de coagulation et de floculation tenant compte du surplus momentané de boues à reconditionner ; ce dosage est réalisé par toute technique connue de l'homme du métier, notamment par une mesure directe ou indirecte de turbidité ou de Matières En Suspension (MES) en entrée du coagulateur éventuellement complétée par une mesure représentative de la teneur en MES des boues récupérées en fond de zone de décantation ; • un système de détection précoce de la nécessité du basculement vers un fonctionnement à débit plus élevé, basé sur :
   - une alerte météorologique
   - un seuil de débit correspondant à une vitesse de décantation appliquée fixée
   - une analyse en temps réel du profil de débit réel, par rapport au profil de débit « typique » (par exemple, débit de temps sec), réactualisé à partir des profils de débits typiques des jours précédents ;
- un système de mesure de la qualité des boues (« Boues conditionnées » sur la figure 1) permettant de déterminer la fin du deuxième mode P2, mode de transition du premier mode P1 « sans réactifs » vers le troisième mode P3 « avec réactifs » au-delà d'une simple temporisation : ce système branché sur la canalisation de recirculation des boues peut être basé, entre autres, sur la mesure de l'aptitude de la boue à décanter correctement (par exemple : vitesse de chute en ligne couplée à une turbidité du surnageant) et/ou sur le taux de boues conditionnées / boues totales (estimé par exemple par le taux de métal / MES qui atteint une asymptote lorsque toutes les boues ont été conditionnées) ;
- un système de mesure de la turbidité ou des MES de l'eau traitée en sortie de décanteur permettant de contrôler l'efficacité du dispositif

Le procédé selon l'invention trouve son application notamment pour le traitement primaire des eaux résiduaires urbaines avec et sans ajout de réactifs de coagulation et de floculation, notamment dans le cas de d'événements à forte variation de débit (par exemple, eaux résiduaires de temps de pluie).

### DESCRIPTION DES FIGURES ET D'UN MODE DE REALISATION DE L'INVENTION

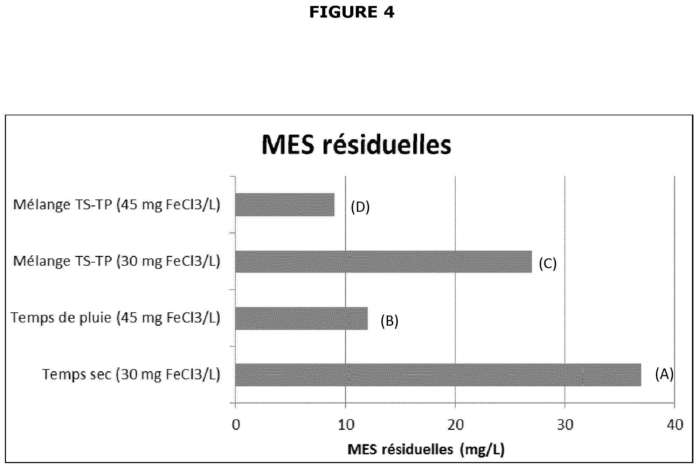

D'autres avantages et particularités de l'invention apparaïtront à la lecture de la description détaillée de mises en oeuvre et de modes de réalisation nullement limitatifs, et des dessins annexés suivants :
Figure 1 : **1A** : système de l'état antérieur de la technique comprenant une zone d'alimentation (6), une zone de coagulation (1) pouvant recevoir le coagulant au moyen d'un système d'injection, une zone de floculation (2) pouvant recevoir un floculant au moyen d'un système d'injection et une zone de décantation (3) dans laquelle se fait la décantation. Une partie des boues sédimentées et éventuellement conditionnées par l'ajout de réactifs est éliminée par purge du fond du décanteur, l'autre partie est recirculée au niveau de la zone de floculation. **1B-1C** : dans ces modes de réalisation de l'invention, le système comprend une zone d'alimentation (6), une zone de coagulation (1) pouvant recevoir le coagulant au moyen d'un système d'injection, une zone de floculation (2) pouvant recevoir un floculant au moyen d'un système d'injection et une zone de décantation (3) dans laquelle se fait la décantation. La recirculation d'une partie des boues est dirigée soit en amont de la zone de coagulation par la conduite (7a) (Figure **1C**) ou vers le coagulateur (Figure **1B**) par la conduite (5a) pour conditionner les boues de décantation simple, par exemple, pendant la phase P2 de transition, soit vers le floculateur par la conduite (5b). Ce dernier mode de réalisation correspond au fonctionnement normal en régime « avec réactifs » établi P3. Cette recirculation, où qu'elle soit dirigée, assure la présence d'une masse de contact suffisante dans le floculateur pour assurer la floculation. **1D :** dans ce mode de réalisation de l'invention, le système comprend une zone d'alimentation (6), une zone de coagulation (1) pouvant recevoir le coagulant au moyen d'un système d'injection, une zone de floculation (2) pouvant recevoir un floculant et une zone de décantation (3) dans laquelle se fait la décantation. La recirculation d'une partie des boues est dirigée vers le floculateur par la conduite (5b) (Figure **1D**) et un système d'injection du réactif de coagulation sur la recirculation des boues (8) est placé entre la zone de décantation et le floculateur. Cette injection peut être soit dédiée, soit être réalisée par une dérivation de l'injection principale de coagulant.
Figure 2 : La figure 2 représente l'évolution du débit d'eau brute au cours du temps ainsi que l'augmentation relative du débit. Elle met en évidence deux des trois modes de démarrage de la phase de transition P2:
   - débit supérieur au seuil de débit fixe (23 000 m3/h) ou variable au cours du temps (de 14 000 m3/h à 28 000 m3/h)
   - augmentation du débit supérieure à 20%/h
Figure 3 : la figure 3 représente la variation de flux massique en fonction de la concentration en boues pour différents types de boues
   - courbe(A) : boue de temps sec avec 30 mg/L de chlorure ferrique
   - courbe (B) : boues de temps de pluie avec 45 mg/L de chlorure ferrique
   - courbe (C) : mélange TS-TP a été réalisé avec les boues issues de l'eau de temps sec avec décantation simple et de l'eau de temps de pluie avec 30 mg/L de chlorure ferrique
   - courbe (D) : mélange TS-TP a été réalisé avec les boues issues de l'eau de temps sec avec décantation simple et de l'eau de temps de pluie avec 45 mg/L de chlorure ferrique
Figure 4 : la figure 4 représente la concentration en MES résiduelles du surnageant pour différents types de boues :
   - courbe(A) : boue de temps sec avec 30 mg/L de chlorure ferrique
   - courbe (B) : boues de temps de pluie avec 45 mg/L de chlorure ferrique
   - courbe (C) : mélange TS-TP réalisé avec les boues issues de l'eau de temps sec avec décantation simple et de l'eau de temps de pluie avec 30 mg/L de chlorure ferrique
   - courbe (D) : mélange TS-TP réalisé avec les boues issues de l'eau de temps sec avec décantation simple et de l'eau de temps de pluie avec 45 mg/L de chlorure ferrique

Un des critères principaux de dimensionnement et d'exploitation des décanteurs physicochimiques à lit de boues est le flux massique (kg/m²/h), qui traduit la capacité des matières en suspension coagulées et floculées à décanter : c'est à dire la quantité de matière pouvant passer au travers d'une surface de 1 m² en 1 heure. Ce paramètre dépend de la concentration : si la concentration est faible, la masse critique permettant une vitesse de chute décantation optimale n'est pas atteinte et le flux massique est faible. Pour les fortes concentrations, le flux massique décroît, la décantation est dite freinée. Il existe un optimum de concentration pour lequel le flux massique est maximal : ce point est le flux massique limite. Ce flux dépend de la nature de l'eau et du dosage de réactifs (coagulant et polymère).

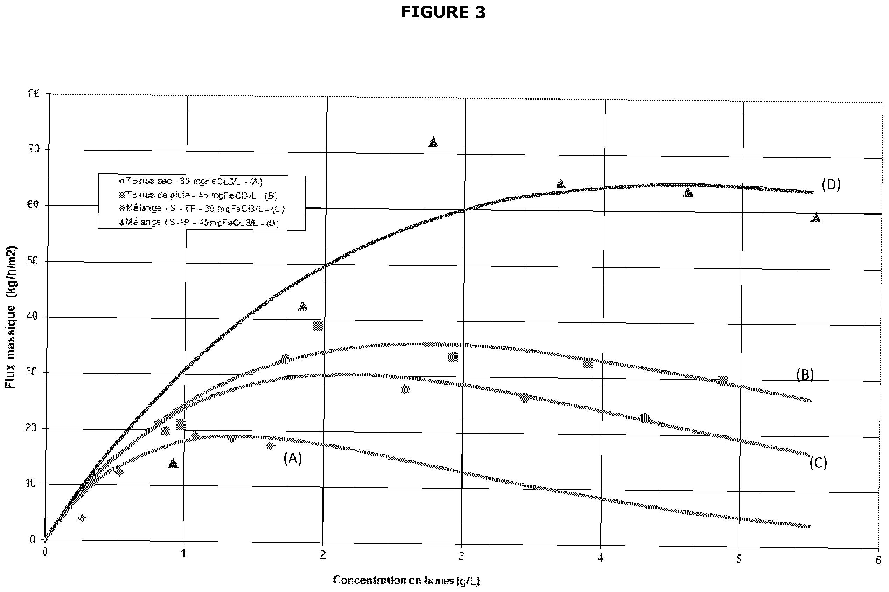

Le procédé selon l'invention a été simulé avec deux eaux usées du même site prélevées le même jour, avant et pendant la survenue d'un temps de pluie. Le mélange temps sec - temps de pluie (« TS-TP ») a été réalisé avec les boues issues de l'eau de temps sec avec décantation simple et de l'eau de temps de pluie. La proportion du mélange a été déterminée en simulant la recirculation des boues de décantation simple vers le coagulateur, qui correspondait à l'équivalent d'un volume de temps sec pour deux volumes de temps de pluie. Les meilleurs résultats sont obtenus avec le mélange TS-TP mettant en œuvre un surdosage de chlorure ferrique (45 mg/L) pour tenir compte du « reconditionnement » des boues de décantation simple en plus des MES de l'eau de temps de pluie avec un flux massique de l'ordre de 60 kg/m²/h (Figure 3).

L'objectif étant l'élimination des matières suspension, le procédé selon l'invention permet une amélioration des performances. La figure 4 présente la concentration en MES résiduelles du surnageant. L'eau de temps sec (TS) présente une concentration en MES résiduelle beaucoup plus élevée que l'eau de temps de pluie (TP). Le mélange TS-TP avec dosage faible en chlorure ferrique (30 mg/L) présente une valeur intermédiaire. Le mélange TS-TP mettant en œuvre un surdosage de chlorure ferrique (45 mg/L) pour tenir compte du « reconditionnement » des boues de décantation simple en plus des MES de l'eau de temps de pluie, présente une concentration en MES résiduelle inférieure à 10 mg/L.

Ainsi, le procédé selon l'invention présente le double intérêt lors des transitions du fonctionnement sans-réactif au fonctionnement avec réactif d'améliorer le flux massique et la qualité de l'eau traitée.

Bien sûr, l'invention n'est pas limitée aux exemples qui viennent d'être décrits et de nombreux aménagements peuvent être apportés à ces exemples sans sortir du cadre de l'invention, qui est défini par les revendications.

## Revendications

1. Procédé de traitement des eaux résiduaires d'origine urbaine ou industrielle, en particulier procédé de traitement primaire des eaux, ledit procédé comprenant un premier mode P1 de fonctionnement du système de traitement appelé « mode sans réactifs », un deuxième mode P2 de fonctionnement de transition du mode sans réactifs P1 à un troisième mode P3, ledit troisième mode P3 de fonctionnement du système de traitement étant appelé «mode avec réactifs », le passage du premier mode P1 au deuxième mode P2 se faisant après vérification d'un premier ensemble de conditions C1, le passage du deuxième mode P2 au troisième mode P3 se faisant après vérification d'un deuxième ensemble de conditions C2 et le passage du troisième mode P3 au mode P1 se faisant après vérification d'un troisième ensemble de conditions C3, le procédé étant **caractérisé en ce que** le premier mode « sans réactif » P1 comprend :
a) le passage de l'eau brute à traiter dans une zone dite de coagulation (1) dans laquelle aucun coagulant n'est présent, ni injecté puis
b) le passage de l'eau issue de ladite zone de coagulation (1) dans une zone dite de floculation (2) dans laquelle aucun agent de floculation n'est présent, ni injecté puis
c) le passage de l'eau issue de ladite zone de floculation (2) dans une zone dite de décantation (3), puis
d) éventuellement une étape de recirculation des boues de décantation simple issues de ladite zone de décantation (3) vers ladite zone de floculation (2) par un circuit externe (5b) ladite zone de floculation étant située en amont de ladite zone de décantation (3),
et **en ce que** le deuxième mode « de transition » P2 qui permet au début de la survenue de forts débits, le conditionnement avec ajout de réactifs des boues de décantation simple recirculées, comprend :
a) soit une étape de recirculation des boues de décantation simple issues de ladite zone de décantation (3) vers ladite zone de coagulation (1) par un circuit externe (5a), ladite zone de coagulation étant située en amont de ladite zone de décantation (3) et ladite zone de coagulation recevant un coagulant
b) soit une étape de recirculation des boues de décantation simple issues de la zone de décantation (3) vers le point d'arrivée de l'eau brute (6) situé en amont de la mesure de turbidité ou de Matières En Suspension (MES) de ladite eau brute par un circuit externe (7a), ladite arrivée d'eau brute étant située en amont de la zone de coagulation recevant du coagulant
c) soit une étape de recirculation des boues de décantation simple issues de ladite zone de décantation (3) vers ladite zone de floculation (2) par un circuit externe (5b), ledit circuit (5b) étant muni d'un système d'injection de coagulant (8) dans ledit circuit (5b), ladite zone de floculation (2) étant située en amont de ladite zone de décantation (3),
et **en ce que** le troisième mode « avec réactifs » P3 comprend :
a) le passage de l'eau brute à traiter dans une zone dite de coagulation (1) dans laquelle un agent coagulant est présent ; puis
b) le passage de l'eau issue de ladite zone de coagulation (1) dans une zone dite de floculation (2) dans laquelle un agent de floculation est présent puis
c) le passage de l'eau issue de ladite zone de floculation (2) dans une zone dite de décantation (3), puis
d) éventuellement une étape de recirculation des boues de décantation conditionnées lors du deuxième mode P2 issues de ladite zone de décantation (3) vers ladite zone de floculation (2) par un circuit externe (5b) ladite zone de floculation étant située en amont de ladite zone de décantation (3).

2. Procédé selon la revendication 1 **caractérisé en ce que** le premier ensemble de conditions C1 comprend :
a. un débit d'eaux résiduaires inférieur à un seuil de débit fixe, ledit seuil de débit fixe pouvant être variable selon les heures de la journée
b. une augmentation de débit sur un temps donné, par exemple 10 minutes, inférieure à une valeur seuil
c. le mode de fonctionnement « avec réactifs » de transition n'a pas été activé manuellement.

3. Procédé selon l'une quelconque des revendications précédentes **caractérisé en ce que** le deuxième ensemble de conditions C2 comprend :
a. une qualité de boues recirculées reconditionnées inférieure à une valeur seuil
b. un temps de fonctionnement de transition inférieur à un temps seuil fixé
c. le mode de fonctionnement « avec réactifs » standard n'a pas été activé manuellement.

4. Procédé selon l'une quelconque des revendications précédentes **caractérisé en ce que** le troisième ensemble de conditions C3 comprend :
a. un débit d'eaux résiduaires inférieur à un seuil de débit fixé, ledit seuil de débit fixé pouvant être variable selon les heures de la journée, et une augmentation de débit sur un temps donné, par exemple 10 minutes, inférieure à une valeur seuil, et un temps de fonctionnement en mode « avec réactifs » standard supérieur au temps de fonctionnement en mode « avec réactifs » standard minimum
b. le mode de fonctionnement « sans réactifs » est activé manuellement.

## Patentansprüche

1. Verfahren zur Behandlung von städtischem oder industriellem Abwasser, insbesondere Erstbe-handlung von Wasser, wobei das Verfahren einen "reagenzmittelfreien Modus" genannten ersten Betriebsmodus P1 des Behandlungssystems umfasst, einen zweiten Betriebsmodus P2 eines Übergangs vom reagenzmittelfreien Modus P1 zu einem dritten Modus P3, wobei der dritte Betriebsmodus P3 des Behandlungssystems als ein "Modus mit Reagenzmitteln" bezeichnet ist, wobei der Übergang vom ersten Modus P1 zum zweiten Modus P2 nach Verifizierung einer ersten Reihe von Bedingungen C1 erfolgt, wobei der Übergang zum zweiten Modus P2 zum dritten Modus P3 nach Verifizierung einer zweiten Reihe von Bedingungen C2 erfolgt und der Übergang vom dritten Modus P3 zum Modus P1 nach Verifizierung einer dritten Reihe von Bedingungen C3 erfolgt, wobei das Verfahren **dadurch gekennzeichnet ist, dass** der erste "reagenzmittelfreie" Modus P1 umfasst:
a) Übergang des unbehandelten, zu behandelnden Rohwassers in eine Gerinnungszone (1) in welcher ein Gerinnungsmittel weder vorhanden ist noch injiziert wird, dann
b) Übergang des aus der Gerinnungszone (1) kommenden Wassers in eine Flockungszone (2), in welcher ein Flockungsmittel weder vorhanden ist noch injiziert wird, dann
c) Übergang von aus der Flockungszone (2) kommenden Wassers in eine Klärzone (3), dann
d) eventuell eine Rückzirkulierstufe für einfachen aus der Klärzone (3) kommenden Klärschlamm in die Flockungszone (2) über einen äußeren Kreislauf (5b), wobei die Flockungszone stromaufwärts von der Klärzone (3) angeordnet ist,
und dadurch, dass der zweite "Übergangs"-Modus P2, welcher am Beginn des Auftretens starken Durchsatzes eine Aufbereitung mit Zusatz von Reagenzmitteln für einfach rückzirkulierten Klärschlamm erlaubt, umfasst:
a) entweder eine Rückzirkulierstufe für einfachen aus der Klärzone (3) kommenden Klärschlamm in die Gerinnungszone (1) über einen äußeren Kreislauf (5a), wobei die Gerinnungszone stromaufwärts von der Klärzone (3) angeordnet ist und die Gerinnungszone ein Gerinnungsmittel empfängt
b) oder eine Rückzirkulierstufe für einfachen aus der Klärzone (3) kommenden Klärschlamm zum Anfangspunkt des Rohwassers (6), welcher stromaufwärts von der Messung des Trübungsgrads oder von suspendierten Materialien (MES) des Rohwassers angeordnet ist, über einen externen Kreislauf (7a), wobei die Zuleitung von Rohwasser stromaufwärts von der Gerinnungszone angeordnet ist, die das Gerinnungsmittel empfängt
c) oder eine Rückzirkulierstufe für einfachen aus der Klärzone (3) kommenden Klärschlamm in die Flockungszone (2) über einen externen Kreislauf (5b), wobei der Kreislauf (5b) mit einem Injektionssystem für Gerinnungsmittel (8) in den Kreislauf (5b) ausgestattet ist, wobei die Flockungszone (2) stromaufwärts von der Klärzone (3) angeordnet ist,
und dadurch, dass der dritte Modus "mit Reagenzmitteln" P3 umfasst:
a) Übergang des zu behandelnden Rohwassers in eine Gerinnungszone (1), in welcher ein Gerinnungsmittel vorhanden ist; dann
b) Übergang des aus der Gerinnungszone (1) kommenden Wassers in eine Flockungszone (2), in welcher ein Flockungsmittel vorhanden ist, dann
c) Übergang des aus der Flockungszone (2) kommenden Wasser in eine Klärzone (3), dann
d) eventuell eine Rückzirkulierstufe für aufbereiteten Klärschlamm, welcher während des zweiten Modus P2 aus der Klärzone kommt, in die Flockungszone (2) über einen externen Kreislauf (5b), wobei die Flockungszone stromaufwärts von der Klärzone (3) angeordnet ist.

2. Verfahren nach die Ansprüch 1 **dadurch gekennzeichnet, dass** die erste Reihe von Bedingungen C1 umfasst:
a. ein Durchsatz von Abwasser niedriger als ein festgelegter Schwellendurchsatz, wobei der festgelegte Schwellendurchsatz je nach Tageszeit variieren kann
b. eine Erhöhung des Durchsatzes über einen gegebenen Zeitraum, beispielsweise zehn Minuten, niedriger als ein Schwellenwert
c. der Übergangsbetriebsmodus "mit Reagenzmitteln" wurde nicht manuell aktiviert.

3. Verfahren nach einem der vorhergehenden Ansprüche **dadurch gekennzeichnet, dass** die zweite Reihe von Bedingungen C2 umfasst:
a. ein Qualität des wieder aufbereiteten rückzirkulierten Schlamms niedriger als ein Schwellenwert
b. Eine Übergangsbetriebszeit niedriger als eine feste Schwellenzeit
c. der Standardbetriebsmodus "mit Reagenzmitteln" wurde nicht manuell aktiviert.

4. Verfahren nach einem der vorhergehenden Ansprüche **dadurch gekennzeichnet, dass** die dritte Reihe von Bedingungen C3 umfasst:
a) ein Durchsatz von Abwasser niedriger als ein fester Schwellendurchsatz, wobei der feste Schwellendurchsatz je nach Tageszeit variabel sein kann, und eine Erhöhung des Durchsatzes über einen gegebenen Zeitraum, beispielsweise zehn Minuten, niedriger als ein Schwellenwert, und eine Betriebszeit im Standardmodus "mit Reagenzmitteln" oberhalb einer Betriebszeit im Standardminimum-Modus "mit Reagenzmitteln"
b) der Betriebsmodus "ohne Reagenzmittel" wurde manuell aktiviert.

## Claims

1. Process for treating urban or industrial wastewater, in particular a process for the primary treatment of water, said process comprising a first operating mode P1 of the treatment system called a "reagent-free mode", a second operating mode P2 of transition from the reagent-free mode P1 to a third mode P3, said third operating mode P3 of the treatment system being called a "mode with reagents", switching from the first mode P1 to the second mode P2 being made after verifying a first set of conditions C1, switching from the second mode P2 to the third mode P3 being made after verifying a second set of conditions C2 and switching from the third mode P3 to the mode P1 being made after verifying a third set of conditions C3, the process being **characterised in that** the first mode "reagent-free" P1 comprises:
a) passing raw water to be treated in a so-called coagulation zone (1) in which no coagulant is present, nor injected and then
b) passing water from said coagulation zone (1) into a so-called flocculation zone (2) in which no flocculation agent is present, nor injected and then
c) passing water from said flocculation zone (2) into a so-called settling zone (3), and then
d) potentially a step of recirculating the plain settling sludge from said settling zone (3) to said flocculation zone (2) by an external circuit (5b), said flocculation zone being located upstream of said settling zone (3),
and **in that** the second mode "of transition" P2 that allows at the beginning of the occurrence of high flow rates, the conditioning of recirculated plain settling sludge with addition of reagents, comprises :
a) either a step of recirculating the plain settling sludge from said settling zone (3) to said coagulation zone (1) by an external circuit (5a), said coagulation zone being located upstream of said settling zone (3) and said coagulation zone receiving a coagulant
b) or a step of recirculating the plain settling sludge from the settling zone (3) to the raw water inlet point (6) located upstream of the measurement of turbidity or suspended matter (SM) of said raw water by an external circuit (7a), said raw water inlet being located upstream of the coagulation zone receiving coagulant
c) or a step of recirculating the plain settling sludge from said settling zone (3) to said flocculation zone (2) by an external circuit (5b), said circuit (5b) being provided with a coagulant injection system (8) into said circuit (5b), said flocculation zone (2) being located upstream of said settling zone (3),
and **in that** the third mode "with reagent" P3 comprises:
a) passing raw water to be treated into a so-called coagulation zone (1) in which a coagulation agent is present; and then
b) passing water from said coagulation zone (1) into a so-called flocculation zone (2) in which a flocculation agent is present and then
c) passing water from said flocculation zone (2) into a so-called settling zone (3), and then
d) potentially a step of recirculating the settling sludge conditioned during the second mode P2 from said settling zone (3) to said flocculation zone (2) by an external circuit (5b), said flocculation zone being located upstream of said settling zone (3).

2. Process according to claim 1, **characterised in that** the first set of conditions C1 comprises:
a. a wastewater flow rate lower than a fixed flow rate threshold, wherein said fixed flow rate threshold can be variable depending on time during the day,
b. an increase in flow rate over a given time, for example 10 minutes, lower than a threshold value,
c. the transition operating mode "with reagents" has not been manually activated.

3. Process according to any of the preceding claims, **characterised in that** the second set of conditions C2 comprises:
a. a reconditioned recirculated sludge quality lower than a threshold value,
b. a transition operating time lower than a fixed threshold time,
c. the standard operating mode "with reagents" has not been manually activated.

4. Process according to any of the preceding claims, **characterised in that** the third set of conditions C3 comprises:
a. a wastewater flow rate lower than a fixed flow rate threshold, wherein said fixed flow rate threshold can be variable depending on time during the day, and an increase in flow rate over a given time, for example 10 minutes, lower than a threshold value, and an operating time in the standard mode "with reagents" higher than the operating time in the minimum standard mode "with reagents",
b. the operating "reagent-free" mode is manually activated.
